# EUROPÄISCHE PATENTANMELDUNG

(11) **EP 1 244 114 A1**
(43) Veröffentlichungstag der Anmeldung: **25.09.2002**
(21) Anmeldenummer: 01810275.6
(22) Anmeldetag: 20.03.2001
(51) Int. Cl.: H01B 1/08, H01B 1/10

(54) **Elektrisch aktive Filme**

(71) Anmelder: ILFORD Imaging Switzerland GmbH, 1723 Marly 1 (CH)
(72) Erfinder: Brugger, Pierre-Alain, Dr., 1731 Ependes (CH); Staiger, Martin, Dr., 1815 Clarens (CH); Steiger, Dr. Rolf, 1724 Praroman (CH)

(57) **Zusammenfassung**

Es wird ein elektrisch aktiver Film sowie dessen Herstellungsverfahren bei tiefen Temperaturen beschrieben, der auf einem Träger mindestens eine darauf aufgebrachte elektrisch aktive, nanokristalline, nanoporöse Übergangsmetalloxide oder Übergangsmetallchalkogenide oder deren Lithium-Einschlussverbindungen enthaltende Schicht sowie gegebenenfalls zusätzliche, elektrisch nicht aktive Schichten aufweist, dadurch gekennzeichnet, dass die elektrisch aktiven Schichten auch nach der Beendigung des Herstellungsprozess noch ein Bindemittel oder ein Bindemittelgemisch enthalten.

## Beschreibung

### Technisches Gebiet

Die vorliegende Erfindung bezieht sich auf elektrisch aktive Filme, die nanokristalline, nanoporöse Übergangsmetalloxide oder Übergangsmetallchalkogenide zusammen mit einem Bindemittel enthalten sowie auf ein Verfahren zu ihrer Herstellung bei tiefen Temperaturen.

### Stand der Technik

Elektrisch aktive Filme, die nanokristalline, nanoporöse Übergangsmetalloxide oder Übergangsmetallchalkogenide oder deren Lithium-Einschlussverbindungen enthalten, werden als Elektroden in primären oder sekundären elektrochemischen Generatoren verwendet, so wie sie beispielsweise in der Patentanmeldung WO 99/59'218 beschrieben werden. Weitere Einsatzgebiete solcher elektrisch aktiver Filme sind photovoltaische Zellen oder elektrochrome Anzeigen.
In der Patentanmeldung EP 0'709'906 wird eine positive Elektrode beschrieben, die aus einer gesinterten Masse von Teilchen sauerstoffhaltiger Lithiumverbindungen der Grösse 33 µm besteht. Diese Teilchen werden unter Druck auf eine Temperatur zwischen 350° C und 1000° C erwärmt, um die nötige elektrische Aktivität zu erreichen.
Im Patent US 5'604'057 wird eine Kathode beschrieben, die aus amorphem, nanoporösen, Lithiumionen einschliessenden Manganoxidteilchen im Submikrometerbereich besteht und deren innere Oberfläche grösser als 100 m²/g ist. Diese Elektroden werden hergestellt, indem das Manganoxid zusammen mit einem vorzugsweise leitenden Bindemittel oder Bindemittelgemisch auf einen leitfähigen Träger (beispielsweise eine Aluminiumfolie) aufgebracht wird. Das Aufbringen kann durch Aufsprühen, Schleuderguss, Rakelguss oder Aufpinseln erfolgen. Anschliessend muss der beschichtete Träger erhitzt werden, aber nicht über 400° C, um eine Auskristallisation des Mangandioxids zu verhindern.
In den Patenten US 5'211'933 und US 5'674'644 wird ein Herstellungsverfahren für LiMn₂O₄ in Spinellform und LiCoO₂ mit Schichtstruktur beschrieben, in dem die Substanzen aus Acetatvorläufern erzeugt werden. Das solchermassen hergestellte LiMn₂O₄-Pulver besteht aus Teilchen der Grösse zwischen 0.3 µm und 1.0 µm. Aus diesem Pulver unter Zusatz von etwa 10 % feinen Graphitteilchen gepresste Tabletten werden als positive Elektrode in Lithiumionenbatterien verwendet. Die Leitfähigkeit zwischen den einzelnen Tabletten wird durch den Graphitzusatz bewirkt. LiMn₂O₄ und LiCoO₂ können auch zusammen mit einem Bindemittel auf Träger aufgebracht werden, wobei der beschichtete Träger anschliessend während 16 Stunden auf eine Temperatur von 600° C erwärmt wird. Bei diesem Vorgang wird das organische Bindemittel vollständig entfernt. Der schlussendlich erhaltene elektrisch aktive Film enthält deshalb kein organisches Bindemittel mehr.
Im Patent US 5'700'442 werden Einschlussverbindungen von Mangandioxid beschrieben, die als positive Elektrode in Lithiumbatterien verwendet werden. Diese Einschlussverbindungen werden durch Erhitzen von β-MnO₂-Pulver mit einer Lithiumverbindung während genügend langer Zeit bei einer Temperatur zwischen 150° C und 500° C hergestellt. Die solchermassen hergestellten, relativ grossen Teilchen mit einer spezifischen Oberfläche unter 7 m²/g sind aber ungeeignet als Material für aktive, schnell entladbare Elektroden.
In der Patentanmeldung EP 0'814'524 werden Lithium-Mangan-Oxide in Spinellform als aktives Kathodenmaterial für sekundäre Lithiumionenbatterien beschrieben. Die mittlere Teilchengrösse liegt zwischen 1 µm und 5 µm und die spezifische Oberfläche zwischen 2 m²/g und 10 m²/g. Wegen der grossen Teilchen und der tiefen inneren Oberfläche sind diese Produkte aber ungeeignet als Material für aktive, schnell entladbare Elektroden.
In der Patentanmeldung WO 99/59'218 wird die Herstellung von TiO₂- und LiMn₂O₄-Elektroden mit Hilfe eines Giess- oder Druckverfahrens beschrieben, bei dem eine wässrige Aufschlämmung einer Manganatvorläuferverbindung auf ein Substrat aufgebracht wird. Um die nötige Schichtdicke zu erreichen, muss dieser Beschichtungsvorgang in der Regel mehrfach ausgeführt werden. Anschliessend muss das beschichtete Substrat in Luft während einiger Minuten auf eine Temperatur zwischen 400° C und 750° C erhitzt werden, um die nötige Leitfähigkeit zu erreichen. Der Sinterprozess bei den höheren Temperaturen ergibt Schichten mit höherer elektrischer Aktivität als der Sinterprozess bei den tieferen Temperaturen.
Die Herstellung dünner Filmelektroden durch das Aufbringen wässriger Aufschlämmungen von Manganatpulvern bei Raumtemperatur zusammen mit 3 % Polyvinylalkohol und 10 % Graphit auf leitfähige Träger wird in "Influence of the Particle Size of Electrode Materials on Intercalation Rate and Capacity of New Electrodes", Journal of Power Sources 81 - 82, 621 - 626 (1999) erwähnt. Die Schichten werden anschliessend während 15 Minuten auf mindestens 200° C erwärmt.
In Tabelle 1 in "Criteria for Choosing Transparent Conductors", MRS Bulletin 25, 52 (2000) werden die bekannten Herstellungsverfahren für durchsichtige Leiter zusammengestellt. Fast alle aufgeführten Herstellungsverfahren erfordern hohe Temperaturen bis zu 1000° C.

Alle diese Herstellverfahren erlauben wegen der erforderlichen hohen Temperaturen und der langen Verfahrensdauern keine kostengünstige Herstellung solcher elektrisch aktiver Filme. Insbesondere können keine leicht erhältlichen, billigen durchsichtigen, filmförmigen Trägermaterialien eingesetzt werden, wie sie beispielsweise in der photographischen Industrie verwendet werden, da diese bei den notwendigen hohen Temperaturen zerstört würden. Ein weiterer Nachteil der erforderlichen hohen Temperaturen ist die Unmöglichkeit des Zusatzes hitzeempfindlicher, insbesondere organischer, Verbindungen, wie beispielsweise spektraler Sensibilisatoren, zu den elektrisch aktiven Filmen. Des weiteren ist die mechanische Festigkeit solcher elektrisch aktiver Filme ungenügend, wie auch deren Haftung auf dem Substrat.

### Zusammenfassung der Erfindung

Ziel der Erfindung ist die Bereitstellung bindemittelhaltiger elektrisch aktiver Filme mit guter mechanischer Stabilität mittels kostengünstiger Herstellungsverfahren bei tiefen Temperaturen, die auch ohne Entfernung des Bindemittels in einem Sinterprozess bei höheren Temperaturen eine hohe elektrische Aktivität aufweisen.
Ein weiteres Ziel der Erfindung ist die Bereitstellung solcher elektrisch aktiver Filme mit guter mechanischer Stabilität mit Hilfe von kostengünstigen Beschichtungsverfahren bei tiefen Temperaturen, bei denen bindemittelhaltige Aufschlämmungen auf kostengünstige organische Kunststoffträger aufgetragen und anschliessend getrocknet werden, die auch ohne Entfernung des Bindemittels in einem Sinterprozess bei höheren Temperaturen eine hohe elektrische Aktivität aufweisen.
Solche elektrisch aktiven Filme bestehen aus einem Träger und mindestens einer darauf aufgetragenen bindemittelhaltigen elektrisch aktiven Schicht sowie gegebenenfalls einer oder mehrerer elektrisch nicht aktiver Schichten.
Es wurde nun überraschenderweise gefunden, dass solche bindemittelhaltigen Filme mit hoher elektrischer Aktivität grossflächig auf kostengünstige Art dadurch hergestellt werden können, dass flüssige Aufschlämmungen oder kolloidale Dispersionen nanokristalliner, nanoporöser Übergangsmetalloxide oder Übergangsmetallchalkogenide oder deren Lithium-Einschlussverbindungen bei Temperaturen zwischen 5° C und 95° C zusammen mit einem Bindemittel oder Bindemittelgemisch, gegebenenfalls zusammen mit elektrisch nicht aktiven Schichten, auf handelsübliche Kunststoff- oder Papierträger aufgebracht und anschliessend bei Temperaturen unterhalb des Siedepunktes (bei Normaldruck) der Aufschlämmflüssigkeit getrocknet werden. Die Temperatur des beschichteten Trägers oder des Trocknungsmediums übersteigt in keiner Phase des Trocknungsprozesses den Siedepunkt (bei Normaldruck) der Aufschlämmflüssigkeit und damit verbleiben das Bindemittel oder Bindemittelgemisch zusammen mit den nanokristallinen, nanoporösen Übergangsmetalloxiden oder Übergangsmetallchalkogeniden oder deren Lithium-Einschlussverbindungen im elektrisch aktiven Film.
In einer bevorzugten Ausführungsart der Erfindung werden wässrige kolloidale Dispersionen solcher nanokristalliner, nanoporöser Übergangsmetalloxide oder Übergangsmetallchalkogenide oder deren Lithium-Einschlussverbindungen bei Temperaturen zwischen 20° C und 55° C zusammen mit einem oder mehreren nichtleitenden, filmbildenden Bindemitteln, gegebenenfalls zusammen mit elektrisch nicht aktiven Schichten, auf Kunststoffträger oder metallisierte Kunststoffträger aufgebracht und mit einem Gasgemisch, vorzugsweise Luft, bei Temperaturen unter 100° C, vorzugsweise unter 60° C getrocknet.
Bevorzugte nanokristalline, nanoporöse Übergangsmetalloxide sind Titandioxid, insbesondere in der Anatas-Form, und LiMn₂O₄ als Lithium-Einschlussverbindung.

### Ausführliche Beschreibung der Erfindung

Die Erfindung beschreibt ein Verfahren zur grossflächigen Herstellung bindemittelhaltigen Filme mit hoher elektrischer Aktivität, in dem flüssige Aufschlämmungen oder kolloidale Dispersionen nanokristalliner, nanoporöser Übergangsmetalloxide oder Übergangsmetallchalkogenide oder deren Lithium-Einschlussverbindungen bei Temperaturen zwischen 5° C und 60° C zusammen mit einem Bindemittel oder Bindemittelgemisch, gegebenenfalls zusammen mit elektrisch nicht aktiven Schichten, auf handelsübliche Kunststoff- oder Papierträger aufgebracht und anschliessend bei Temperaturen unterhalb des Siedepunktes (bei Normaldruck) der Aufschlämmflüssigkeit getrocknet werden. Die Temperatur des beschichteten Trägers oder des Trocknungsmediums übersteigt in keiner Phase des Trocknungsprozesses den Siedepunkt (bei Normaldruck) der Aufschlämmflüssigkeit und damit verbleiben das Bindemittel oder Bindemittelgemisch zusammen mit den nanokristallinen, nanoporösen Übergangsmetalloxiden oder Übergangsmetallchalkogeniden oder deren Lithium-Einschlussverbindungen nach dem Ende des Herstellungsprozesses in der elektrisch aktiven Schicht des elektrisch aktiven Film.
In einer bevorzugten Ausführungsart der Erfindung werden wässrige kolloidale Dispersionen solcher nanokristalliner, nanoporöser Übergangsmetalloxide oder Übergangsmetallchalkogenide oder deren Lithium-Einschlussverbindungen bei Temperaturen zwischen 20° C und 55° C zusammen mit einem oder mehreren nichtleitenden, filmbildenden Bindemitteln, gegebenenfalls zusammen mit elektrisch nicht aktiven Schichten, auf Kunststoffträger aufgebracht und mit einem Gasgemisch, vorzugsweise Luft, bei Temperaturen unter 100° C, vorzugsweise unter 60° C getrocknet.

Die Trocknung kann auch durch Infrarotstrahlung erfolgen oder es kann eine kombinierte Trocknung mit einem Gasgemisch und gleichzeitige Anwendung von Infrarotstrahlung zum Einsatz kommen.

Geeignete nanokristalline, nanoporöse Übergangsmetalloxide und Übergangsmetallchalkogenide umfassen insbesondere Oxide oder Chalkogenide der Übergangsmetalle wie TiO₂, Ti₂O₃, Nb₂O₅, WO₃, V₂O₅, MoO₃, MnO₂, HfO₂, TiS₂, WS₂, TiSe₂, Fe₂O₃, Fe₃O₄, RuO₂, RuS₂, MoS₂, WS₂, IrO₂, CeO₂, InO₂, TaO₂, ZnO, SnO₂, BaTiO₃, SrTiO₃ oder Indium-Zinn-Oxid mit spezifischen Oberflächen zwischen 10 m²/g und 400 m²/g. Es können auch Lithium-Einschlussverbindungen verwendet werden wie beispielsweise LiMn₂O₄, LiNiO₂, LiCoO₂ oder Li(NiCo)O₂.
Nanokristalline, nanoporöse Übergangsmetalloxide und Lithium-Einschlussverbindungen nanokristalliner, nanoporöser Übergangsmetalloxide werden bevorzugt.
Besonders bevorzugt sind Titandioxid in seiner Anatas-Form und LiMn₂O₄.
Die Grösse dieser nanokristallinen, nanoporösen Primärteilchen liegt vorzugsweise zwischen 10 nm und 500 nm, besonders bevorzugt zwischen 10 nm und 100 nm.
Im Falle von TiO₂ haben die Primärteilchen vorzugsweise eine Grösse zwischen 10 nm und 50 nm mit einem Maximum der Grössenverteilung bei 25 nm.
Im Falle von LiMn₂O₄ haben die Primärteilchen vorzugsweise eine Grösse unter 100 nm.
Die elektrisch aktiven Filme enthalten diese nanokristallinen, nanoporösen Metalloxide, Metallchalkogenide oder Lithium-Einschlussverbindungen in einer Menge von 1 g/m² bis 100 g/m², vorzugsweise in einer Menge von 3 g/m² bis 50 g/m². Diese Mengen entsprechen Filmdicken zwischen 1 µm und 100 µm beziehungsweise 3 µm und 50 µm.
Bevorzugt sind des weiteren elektrisch aktive Filme, die auf einem Träger eine elektrisch aktive Schicht und darauf eine elektrisch inaktive Schicht aufweisen. Vorteilhafterweise enthält die elektrisch inaktive Schicht ein filmbildendes Bindemittel und ein elektrisch inaktives Pigment.
In einer besonders bevorzugten Ausführungsart enthält dabei die elektrisch inaktive Schicht γ-Al₂O₃ als Pigment und Polyvinylalkohol als Bindemittel, wobei das Gewichtsverhältnis zwischen dem Bindemittel und dem Pigment 1 : 5 und 1 : 40, insbesondere 1 : 10 und 1 : 30 ist und die elektrisch inaktive Schicht eine Dicke zwischen 2 µm und 20 µm, vorzugsweise zwischen 4 µm und 15 µm aufweist.

Die Bindemittel sind im allgemeinen wasserlösliche, nichtleitende Polymere. Besonders bevorzugt sind filmbildende, nichtleitende Polymere.

Die wasserlöslichen, nichtleitenden Polymere umfassen beispielsweise natürliche oder daraus hergestellte modifizierte Verbindungen wie Albumin, Gelatine, Kasein, Stärke, Gummi arabicum, Natrium- oder Kaliumalginat, Hydroxyethylcellulose, Carboxymethylcellulose, α-, β- oder γ-Cyclodextrin usw. Wenn eines der wasserlöslichen Polymere Gelatine ist, so können alle bekannten Gelatinetypen verwendet werden, wie saure Schweinehautgelatine oder alkalische Knochengelatine, sauer oder basisch hydrolysierte Gelatinen.
Ein bevorzugtes natürliches, nichtleitendes, filmbildendes Bindemittel ist Gelatine. Synthetische, nichtleitende Bindemittel können ebenfalls verwendet werden und umfassen beispielsweise Polyvinylalkohol, Polyvinylpyrrolidon, vollständig oder teilweise verseifte Verbindungen von Copolymeren aus Vinylacetat und anderen Monomeren; Homopolymere oder Copolymere von ungesättigten Carbonsäuren wie (Meth)acrylsäure, Maleinsäure, Crotonsäure usw. Homopolymere oder Copolymere aus Vinylmonomeren von (Meth)acrylamid; Homopolymere oder Copolymere anderer Monomerer mit Ethylenoxid; Polyurethane; Polyacrylamide können ebenfalls verwendet werden wie auch wasserlösliche Nylonpolymere; Polyester; Polyvinyllactame; Acrylamidpolymere; substituierter Polyvinylalkohol; Polyvinylacetale; Polymere aus Alkyl- und Sulfoalkylacrylaten und -methacrylaten; hydrolysierte Polyvinylacetate; Polyamide; Polyvinylpyridine; Polyacrylsäure; Polyacrylnitrile; Copolymere mit Maleinsäureanhydrid; Polyalkylenoxide; Polyethylenglykole; Copolymere mit Methacrylamid und Copolymere mit Maleinsäure oder fluorierte Polymere wie Polyvinylidenfluorid. Alle diese Polymere können auch als Mischungen verwendet werden.
Bevorzugte synthetische nichtleitende, filmbildende Bindemittel sind Polyvinylalkohol, Polyvinylidenfluorid, Polyethylenoxide, Polyethylenglykole und Polyacrylnitrile oder ihre Mischungen.
Zu den nichtleitenden Polymeren können zusätzlich nochfeinteiliger Graphit oder Kohlenstoff-Röhrchen im Nanometerbereich zugemischt werden.
Als leitende, filmbildende Polymere können Polythiophene, Polyaniline, Polyacetylene, Poly(3,4-ethylen)dioxythiophen und Polyphenylenvinylene verwendet werden, wobei Poly(3,4-ethylen)dioxythiophen bevorzugt wird.
Die Polymere können mit wasserunlöslichen natürlichen oder synthetischen hochmolekularen Verbindungen gemischt werden, insbesondere mit Acryllatices oder Styrolacryllatices.
Obwohl wasserunlösliche, leitende oder nichtleitende, filmbildende Bindemittel nicht explizit beansprucht werden, so sollen wasserunlösliche, leitende oder nichtleitende, filmbildende Polymere trotzdem als Systembestandteil angesehen werden.
Die Menge des filmbildenden Polymers soll möglichst gering sein, aber noch ausreichend, um stabile, gut auf dem Träger haftende Beschichtungen zu erzielen.

Geeignete Mengen sind 0.5 % bis 20 % filmbildendes Bindemittel bezogen auf die Gesamtmenge der nanokristallinen, nanoporösen Übergangsmetalloxide, Übergangsmetallchalkogenide oder Lithium-Einschlussverbindung. Bevorzugt sind Mengen zwischen 1 % und 10 %, insbesondere zwischen 2 % und 5 %.

Die oben erwähnten Polymere mit vernetzbaren Gruppen können mit Hilfe eines Vernetzers oder Härters zu praktisch wasserunlöslichen Schichten umgesetzt werden. Solche Vernetzungen können kovalent oder ionisch sein. Die Vernetzung oder Härtung der Schichten erlaubt eine Veränderung der physikalischen Schichteigenschaften, wie beispielsweise der Flüssigkeitsaufnahme, oder der Widerstandsfähigkeit gegen Schichtverletzungen.
Die Vernetzer und Härter werden auf Grund der zu vernetzenden wasserlöslichen Polymere ausgesucht.
Organische Vernetzer und Härter umfassen z. B. Aldehyde (wie Formaldehyd, Glyoxal oder Glutaraldehyd); N-Methylolverbindungen (wie Dimethylolharnstoff oder Methylol-Dimethylhydantoin); Dioxane (wie 2,3-Dihydroxydioxan); reaktive Vinylverbindungen (wie 1,3,5-Trisacryloyl-Hexahydro-s-Triazin oder Bis-(Vinylsulfonyl)methylether), reaktive Halogenverbindungen (wie 2,4-Dichloro-6-Hydroxy-s-Triazin); Epoxide; Aziridine; Carbamoylpyridinverbindungen oder Mischungen zweier oder mehrere dieser erwähnten Vernetzer.
Anorganische Vernetzer und Härter umfassen beispielsweise Chromalaun, Aluminiumalaun, Borsäure, Zirkoniumverbindungen oder Titanocene.
Die Schichten können auch reaktive Substanzen enthalten, die unter Einwirkung von UV-Licht, Elektronenstrahlen, Röntgenstrahlen oder Wärme die Schichten vernetzen.
Elektrisch aktive Filme, die auf einem Träger eine elektrisch aktive Schicht und darauf eine elektrisch inaktive Schicht aufweisen, werden vorteilhafterweise zusätzlich mit einem an das Bindemittel der elektrisch inaktiven Schicht angepassten Vernetzer gehärtet, um eine ausgezeichnete mechanische Festigkeit zu erzielen. Bei Verwendung von Polyvinylalkohol in der elektrisch inaktiven Schicht werden vorteilhafterweise Borsäure oder Borate als Vernetzer verwendet.

Eine grosse Vielfalt an Trägern ist bekannt und wird unter anderem in der photographischen Industrie eingesetzt. Zur Herstellung elektrisch aktiver Filme können alle Träger, die bei der Herstellung von photographischen Materialien verwendet werden, eingesetzt werden, so beispielsweise transparente Träger aus Celluloseestern wie Cellulosetriacetat, Celluloseacetat, Cellulosepropionat, oder Celluloseacetat/butyrat, Polyester wie Polyethylenterephthalat oder Polyethylennaphthalat, Polyamide, Polycarbonate, Polyimide, Polyolefine, Polyvinylacetale, Polyether, Polyvinylchlorid und Polyvinylsulfone. Bevorzugt werden Polyester, insbesondere Polyethylenterephthalat oder Polyethylennaphthalat wegen ihrer ausgezeichneten Dimensionsstabilität. Bei den in der photographischen Industrie eingesetzten opaken Trägern können beispielsweise Barytpapier, mit Polyolefinen beschichtete Papiere, weissopake Polyester wie z. B. Melinex® der Firma DuPont eingesetzt werden. Besonders bevorzugt sind polyolefinbeschichtete Papiere oder weissopaker Polyester. Alle diese Träger können auch mit einer leitenden Metallschicht versehen sein.
Ebenfalls als Träger können unbeschichtete Papiere verschiedener Typen verwendet werden, die in ihrer Zusammensetzung und in ihren Eigenschaften grosse Unterschiede aufweisen können. Pigmentierte Papiere und Hochglanzpapiere können ebenfalls verwendet werden.
Auch Metallfolien, beispielsweise aus Aluminium, oder mit einer hoch leitfähigen Schicht ausgerüstete Kunststoffträger sind als Träger elektrisch aktiver Filme geeignet. Bevorzugt werden metallisierte oder mit Indiumzinnoxid beschichtete Kunststoffträger.

Die erfindungsgemässen elektrisch aktiven Schichten werden im allgemeinen aus wässrigen Lösungen oder Dispersionen, die alle nötigen Komponenten enthalten, gegossen. In vielen Fällen werden Netzmittel als Begusshilfsmittel zugesetzt, um das Giessverhalten und die Schichtgleichmässigkeit zu verbessern. Obwohl solche oberflächenaktiven Verbindungen in der Erfindung nicht beansprucht werden, bilden sie trotzdem einen wesentlichen Bestandteil der Erfindung.
Die Giesslösungen können auf verschiedene Arten auf den Träger aufgebracht werden. Die Giessverfahren schliessen beispielsweise den Extrusionsguss, den Luftmesserguss, den Schlitzguss, den Kaskadenguss und den Vorhangguss ein. Die Giesslösungen können auch mit einem Sprüh- oder einem Druckverfahren wie Tiefdruck oder Offsetdruck aufgebracht werden. Die elektrisch aktiven Schichten können in mehreren Durchgängen aufgebracht werden. Bevorzugt wird aber der Beguss in einem Durchgang. Ein Träger kann auch beidseitig mit elektrisch aktiven Schichten begossen werden. Das gewählte Giessverfahren schränkt die Erfindung aber in keiner Art und Weise ein.
Die Giessgeschwindigkeit hängt vom verwendeten Giessverfahren ab und kann innerhalb weiter Grenzen verändert werden. Bevorzugt als Giessverfahren wird der Vorhangguss bei Geschwindigkeiten zwischen 30 m/min und 300 m/min.
Die Träger mit den darauf aufgebrachten elektrisch aktiven Schichten, gegebenenfalls zusammen mit elektrisch nicht aktiven Schichten, werden unmittelbar nach dem Beguss getrocknet, wobei die Temperatur des Trägers oder des Trocknungsmediums in keiner Phase des Herstellprozesses den Siedepunkt (bei Normaldruck) der Aufschlämmflüssigkeit überschreitet.

Beim Beschichtungsvorgang wässriger, kolloidaler Dispersionen solcher nanokristalliner, nanoporöser Metalloxide oder Metallchalkogenide oder deren Lithium-Einschlussverbindungen zusammen mit dem Bindemittel oder Bindemittelgemisch beträgt die Temperatur der Beschichtungsflüssigkeit zwischen 20° C und 60° C und die Temperatur des Trocknungsmediums, insbesondere Luft, höchstens 100° C, vorzugsweise höchstens 60° C.
Die vorliegende Erfindung wird durch die folgenden Beispiele näher beschrieben, ohne dass sie dadurch in irgendeiner Weise eingeschränkt würde.

### Beispiele

### Beispiel 1

### Herstellung einer wässrigen Dispersion von Titandioxid

24.6 g nanokristallines, nanoporöses TiO₂ (P25 (Anatas-Modifikation), erhältlich bei Degussa-Hüls AG, Frankfurt am Main, Deutschland) wurden bei einer Temperatur von 40° C in 170 g deionisiertem Wasser unter Einwirkung von Ultraschall während einiger Minuten dispergiert. Anschliessend wurde der pH-Wert der Dispersion durch Zugabe von wässriger Kalilauge (1 %) auf 4.50 eingestellt. Nach einer weiteren Ultraschallbehandlung wurde das Endgewicht mit deionisiertem Wasser auf 200 g eingestellt. Die dermassen hergestellte Dispersion von P25 enthielt 12.3 Gewichtsprozent TiO₂.

### Herstellung der Beschichtungslösung

65.04 g dieser Dispersion wurden bei einer Temperatur von 40° C mit 7.2 g deionisiertem Wasser vermischt. Anschliessend wurden 4.27 g einer wässrigen Lösung von Polyethylenglykol (7.5 %, Molekulargewicht 100'000, erhältlich bei Fluka Chemie AG, Buchs, Schweiz) zugegeben, die Mischung mit deionisiertem Wasser auf ein Endgewicht von 80 g eingestellt und einige Minuten mit Ultraschall behandelt.

### Beschichtung

100 g/m² dieser Beschichtungslösung wurden bei 40° C mit Hilfe eines Stabgiessers auf einen dünnen, durchsichtigen Polyethylenterephthalatträger aufgebracht, auf dessen Oberfläche eine dünne Kupferfolie aufgeklebt war. Anschliessend wurde der beschichtete Träger 60 Minuten bei 30° C getrocknet. 1 m² des beschichteten Trägers enthält 10 g TiO₂ und 0.4 g Polyethylenglykol.

### Vergleichsbeispiel C - 1

Als Vergleichsmaterial wurde ein gesinterte Schicht von nanokristallinem, nanoporösem, gesintertem TiO₂ verwendet, die nach der in "Nanocrystalline Titanium Oxide Electrodes for Photovoltaic Applications", Journal of the American Ceramic Society 80, 3157 - 3171 (1997) beschriebenen Methode hergestellt wurde. Dabei wird TiO₂ mit Polyethylenglykol (Molekulargewicht 25'000) und Wasser vermischt. Die resultierende Paste wird auf eine mit leitfähigem Zinnoxid beschichtete Glasplatte aufgebracht und bei einer Temperatur von 400° C während 20 Minuten in Luft erhitzt, wobei das organische Bindemittel zersetzt wird und aus der auf dem Träger aufgebrachten Schicht entweicht.

### Beispiel 2

### Herstellung einer wässrigen Dispersion von Lithiummanganat

100.0 g Kathodenpulver SP 30 (erhältlich bei Merck, Darmstadt, Deutschland) wurden in Ethanol dispergiert und anschliessend während 3 Stunden in einer Kugelmühle gemahlen. Nach Trocknung bei einer Temperatur von 40° C wurden 20.0 g dieses nanokristallinen, nanoporösen LiMn₂O₄ in 65.8 g deionisiertem Wasser unter Einwirkung von Ultraschall während einiger Minuten dispergiert.

### Herstellung der Beschichtungslösung

Zu 65.8 g dieser Dispersion wurden bei einer Temperatur von 40° C 10.67 g einer wässrigen Lösung von Polyethylenglykol (7.5 %, Molekulargewicht 100'000) zugegeben, die Mischung mit deionisiertem Wasser auf ein Endgewicht von 100 g eingestellt und einige Minuten mit Ultraschall behandelt.

### Beschichtung

24 g/m² dieser Beschichtungslösung wurden bei 40° C mit Hilfe eines Stabgiessers auf einen dünnen, durchsichtigen Polyethylenterephthalatträger aufgebracht, der auf seiner Oberfläche eine dünne aufgedampfte Schicht aus Indiumzinnoxid aufwies. Anschliessend wurde der begossene Träger 60 Minuten bei 30° C getrocknet. 1 m² des beschichteten Trägers enthält 4.8 g LiMn₂O₄ und 0.2 g Polyethylenglykol.

### Vergleichsbeispiel C - 2

Als Vergleichsmaterial wurde ein gesinterte Schicht von nanokristallinem, nanoporösem, gesintertem LiMn₂O₄ verwendet, die nach der im "Journal of the American Ceramic Society" 80, 3157 - 3171 (1997) beschriebenen Methode hergestellt wurde. Dabei wird LiMn₂O₄ mit Polyethylenglykol (Molekulargewicht 25'000) und Wasser vermischt. Die resultierende Paste wird auf eine mit leitfähigem Zinnoxid beschichtete Glasplatte aufgebracht und bei einer Temperatur von 400° C während 20 in Luft erhitzt, wobei das organische Bindemittel zersetzt wird und aus der auf dem Träger aufgebrachten Schicht entweicht.

### Beispiel 3

### Beschichtung

45 g/m² der Beschichtungslösung aus Beispiel 1 wurden bei 40° C mit Hilfe eines Stabgiessers auf einen dünnen, durchsichtigen Polyethylenterephthalatträger aufgebracht, auf dessen Oberfläche eine dünne Kupferfolie aufgeklebt war. Anschliessend wurde der beschichtete Träger 60 Minuten bei 30° C getrocknet. 1 m² des beschichteten Trägers enthält 4.5 g TiO₂ und 0.18 g Polyethylenglykol.

### Beispiel 4 (Doppelschichtsystem)

### Herstellung der Beschichtungslösung für die obere Schicht

14.5 g Aluminiumoxid C (Gehalt 96.6 % an Al₂O₃, erhältlich bei Degussa-Hüls AG, Frankfurt am Main, Deutschland) wurden bei einer Temperatur von 25° C unter guter mechanischer Rührung in 62.9 g deionisiertem Wasser und 0.2 g wässriger Milchsäure (90 %) dispergiert. Nach 60 Minuten Rühren wurden 15.47 g einer wässrigen Lösung von Polyvinylalkohol (7.5 %, Hydrolysegrad 98 - 99 %, Molekulargewicht 85'000 bis 146'000, erhältlich bei ALDRICH Chemie, Buchs, Schweiz) zugegeben, die Beschichtungslösung mit Ultraschall behandelt und das Endgewicht mit deionisiertem Wasser auf 100 g eingestellt.

### Beschichtung (obere Schicht)

40 g/m² dieser Beschichtungslösung wurden nach Zugabe von Borsäure als Härter bei 40° C mit Hilfe eines Stabgiessers auf den begossenen Träger aus Beispiel 3 aufgebracht und anschliessend wurde der Träger mit den beiden Schichten 60 Minuten bei 30° C getrocknet. 1 m² des begossenen Trägers enthält neben den anderen Giesszusätzen 4.5 g TiO₂, 0.18 g Polyethylenglykol, 6.04 g Al₂O₃ und 0.76 g Polyvinylalkohol.

Cyclische Voltametrie wurde zur Bestimmung der elektrischen Aktivität der hier beschriebenen elektrisch aktiven Filme verwendet.

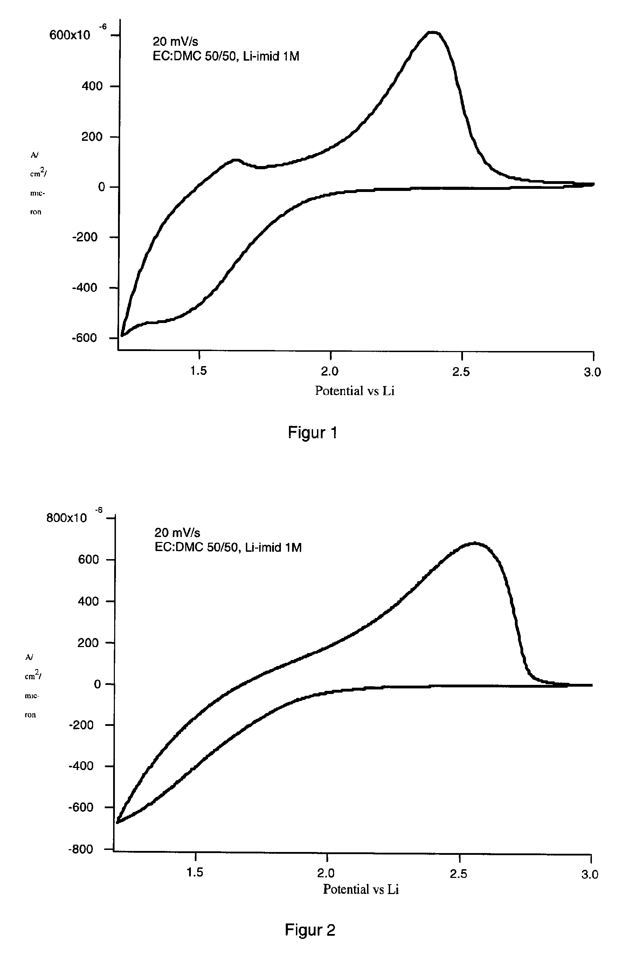

Das cyclische Voltagramm des gemäss unserer Erfindung mit TiO₂ beschichteten Trägers (Beispiel 1) ist in Figur 1 aufgezeichnet; dasjenige eines gesinterten, TiO₂ enthaltenden, nach dem Stand der Technik hergestellten elektrisch aktiven Films (Vergleichsbeispiel C - 1) in Figur 2. Diesen beiden Figuren ist sofort zu entnehmen, dass die elektrische Aktivität des nach dem erfindungsgemässen Verfahren hergestellten elektrisch aktiven Films (Beispiel 1, ohne Behandlung bei hohen Temperaturen) gleich gut ist wie diejenige eines Films, der mit einem Verfahren des Standes der Technik (Vergleichsbeispiel C - 1, mit Behandlung bei hohen Temperaturen) hergestellt wurde.

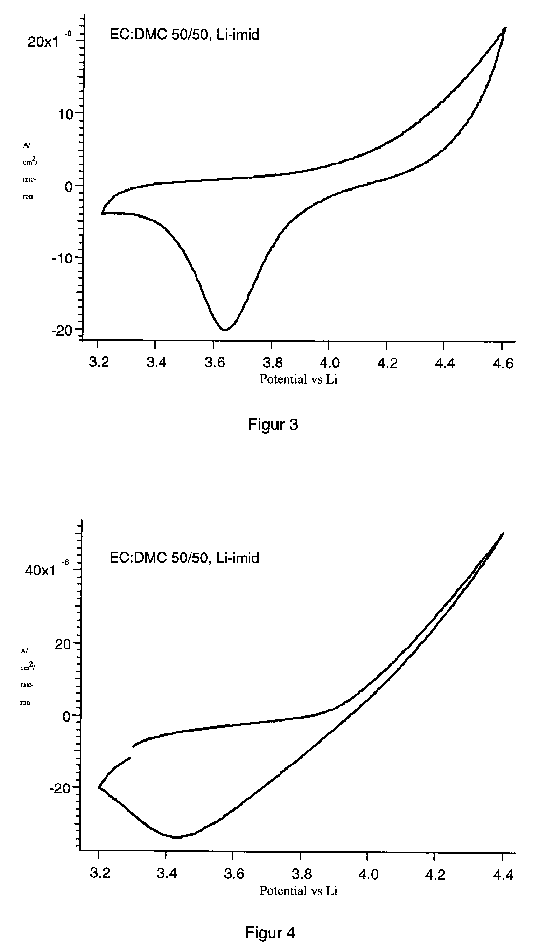

Das cyclische Voltagramm des gemäss unserer Erfindung mit LiMn₂O₄ beschichteten Trägers (Beispiel 2) ist in Figur 3 aufgezeichnet; dasjenige eines gesinterten, LiMn₂O₄ enthaltenden, nach dem Stand der Technik hergestellten elektrisch aktiven Films (Vergleichsbeispiel C - 2) in Figur 4. Diesen beiden Figuren ist sofort zu entnehmen, dass die elektrische Aktivität des nach dem erfindungsgemässen Verfahren hergestellten elektrisch aktiven Films (Beispiel 2, ohne Behandlung bei hohen Temperaturen) gleich gut ist wie diejenige eines Films, der mit einem Verfahren des Standes der Technik (Vergleichsbeispiel C - 2, mit Behandlung bei hohen Temperaturen) hergestellt wurde.

Die dickennormierte maximale Stromdichte des gemäss unserer Erfindung hergestellten Versuchsmaterials aus Beispiel 3 (mittels cyclischer Voltametrie im Spannungsbereich zwischen 1.2 V und 3 V gegen Lithium bestimmt) betrug 0.6 mA / cm² / µm bei einer Abtastgeschwindigkeit von 20 mV / sec.
Die dickennormierte maximale Stromdichte des gemäss unserer Erfindung hergestellten Versuchsmaterials aus Beispiel 4 betrug unter den gleichen Messbedingungen 1.1 mA / cm² / µm bei einer Abtastgeschwindigkeit von 20 mV / sec.
Der elektrisch aktive Film, der über der elektrisch aktiven Schicht zusätzlich noch eine elektrisch inaktive Schicht enthält (Beispiel 4) zeigt somit eine höhere elektrische Aktivität als der Film, der nur die elektrisch aktive Schicht enthält. Zusätzlich ist die mechanische Stabilität des elektrisch aktiven Films von Beispiel 4 hervorragend.

## Patentansprüche

1. Elektrisch aktive Filme, bestehend aus einem Träger und mindestens einer darauf aufgebrachten elektrisch aktiven, nanokristalline, nanoporöse Übergangsmetalloxide oder Übergangsmetallchalkogenide oder deren Lithium-Einschlussverbindungen enthaltenden Schicht sowie gegebenenfalls zusätzlicher, elektrisch nicht aktiver Schichten, **dadurch gekennzeichnet, dass** die elektrisch aktiven Schichten nach der Beendigung des Herstellungsverfahrens noch ein Bindemittel oder Bindemittelgemisch enthalten.

2. Elektrisch aktive Filme gemäss Anspruch 1, **dadurch gekennzeichnet, dass** mindestens eines der Bindemittel filmbildend ist.

3. Elektrisch aktive Filme gemäss den Ansprüchen 1 und 2, **dadurch gekennzeichnet, dass** die elektrisch aktiven Schichten das Bindemittel oder Bindemittelgemisch in einer Menge von 0.5 % bis 20 % bezogen auf die Gesamtmenge der nanokristallinen, nanoporösen Übergangsmetalloxide, Übergangsmetallchalkogenide oder Lithium-Einschlussverbindung enthalten.

4. Elektrisch aktive Filme gemäss den Ansprüchen 1 und 2, **dadurch gekennzeichnet, dass** die elektrisch aktiven Schichten das Bindemittel oder Bindemittelgemisch in einer Menge von 1 % bis 10 % bezogen auf die Gesamtmenge der nanokristallinen, nanoporösen Übergangsmetalloxide, Übergangsmetallchalkogenide oder Lithium-Einschlussverbindung enthalten.

5. Elektrisch aktive Filme gemäss den Ansprüchen 1 und 2, **dadurch gekennzeichnet, dass** die elektrisch aktiven Schichten das Bindemittel oder Bindemittelgemisch in einer Menge von 2 % bis 5 % bezogen auf die Gesamtmenge der nanokristallinen, nanoporösen Übergangsmetalloxide, Übergangsmetallchalkogenide oder Lithium-Einschlussverbindung enthalten.

6. Elektrisch aktive Filme gemäss den Ansprüchen 1 bis 5, **dadurch gekennzeichnet, dass** das Bindemittel oder Bindemittelgemisch mindestens eine Verbindung aus der Gruppe bestehend aus Polyvinylalkohol, Polyvinylidenfluorid, Polyethylenoxid, Polyethylenglykol und Polyacrylnitril enthält.

7. Elektrisch aktive Filme gemäss den Ansprüchen 1 bis 6, **dadurch gekennzeichnet, dass** das Bindemittel oder Bindemittelgemisch vernetzt ist.

8. Elektrisch aktive Filme gemäss den Ansprüchen 1 bis 7, **dadurch gekennzeichnet, dass** das nanokristalline, nanoporöse Übergangsmetalloxid oder Übergangsmetallchalkogenid oder Lithium-Einschlussverbindung Titandioxid in seiner Anatas-Form oder LiMn₂O₄ ist.

9. Elektrisch aktive Filme gemäss den Ansprüchen 1 bis 8, **dadurch gekennzeichnet, dass** der Träger aus der Gruppe bestehend Polyethylenterephthalat, Polyethylennaphthalat, mit Indiumzinnoxid oder Metallen beschichtetem Polyethylenterephthalat oder mit Indiumzinnoxid oder Metallen beschichtetem Polyethylennaphthalat ausgewählt wird.

10. Elektrisch aktive Filme gemäss den Ansprüchen 1 bis 9, **dadurch gekennzeichnet, dass** der elektrisch aktive Film oberhalb der elektrisch aktiven Schichten eine elektrisch nicht aktive Schicht bestehend aus Polyvinylalkohol und γ-Al₂O₃ enthält.

11. Elektrisch aktive Filme gemäss Anspruch 10, **dadurch gekennzeichnet, dass** die elektrisch nicht aktive Schicht mit Borsäure oder Boraten gehärtet wird.

12. Verfahren zur Herstellung elektrisch leitender Filme gemäss den Ansprüchen 1 bis 11, **dadurch gekennzeichnet, dass** eine flüssige Aufschlämmung oder kolloidale Dispersion der nanokristallinen, nanoporösen Übergangsmetalloxide oder Übergangsmetallchalkogenide oder deren Lithium-Einschlussverbindungen bei Temperaturen zwischen 5° C und 60° C zusammen mit einem Bindemittel oder Bindemittelgemisch auf den Träger aufgebracht und anschliessend der beschichtete Träger bei Temperaturen unterhalb des Siedepunktes (bei Normaldruck) der Aufschlämmflüssigkeit getrocknet wird, wobei der elektrisch leitende Film während des ganzen Herstellungsverfahrens keinen höheren Temperaturen ausgesetzt wird.

13. Verfahren zur Herstellung elektrisch leitender Filme gemäss den Ansprüchen 1 bis 11, **dadurch gekennzeichnet, dass** eine wässrige kolloidale Dispersion der nanokristallinen, nanoporösen Übergangsmetalloxide oder Übergangsmetallchalkogenide oder deren Lithium-Einschlussverbindungen bei Temperaturen zwischen 20° C und 55° C zusammen mit einem Bindemittel oder Bindemittelgemisch auf den Träger aufgebracht und anschliessend der beschichtete Träger mit Luft bei Temperaturen unterhalb 60° C getrocknet wird, wobei der elektrisch leitende Film während des ganzen Herstellungsverfahrens keinen höheren Temperaturen ausgesetzt wird.
